# EUROPEAN PATENT APPLICATION

(11) **EP 0 915 609 A2**
(43) Date of publication of application: **12.05.1999**
(21) Application number: 98119191.9
(22) Date of filing: 12.10.1998
(51) Int. Cl.: H04M 11/02, H04M 1/64

(54) **Door entry security system**

(30) Priority: 24.10.1997 GB 9722559
(71) Applicant: Yewman, Mark Rowland, Woodford Green, Essex IG8 0RN (GB)
(72) Inventor: Yewman, Mark Rowland, Woodford Green, Essex IG8 0RN (GB)
(74) Representative: Gambell, Derek

(57) **Abstract**

The system comprises a door unit (10) incorporating a call device (16) and a control unit (12). Means are provided for establishing voice communication between the door unit (10) and the control unit (12). The control unit (12) includes a message memory unit (24) to relay a pre-recorded out-going message to the caller upon operation of the call device (16) of the door unit (10) and to record in-coming messages provided by the caller at the door unit. The message memory unit (24) is part of a combined telephone and answering machine, capable of making and receiving telephone calls, and relaying and recording telephone messages, via a telecommunications link (25).

## Description

### Field of the invention

This invention relates to a door entry security system. In particular, but not exclusively, this invention relates to door entry systems for controlled entry to domestic and commercial premises, such as homes and offices.

### Background of the invention

A known door entry security system comprises a door unit, a control unit, means for establishing voice communication between the door unit and the control unit, a door locking mechanism and means for triggering release of the door locking mechanism from the control unit. The caller operates a call device at the door unit, such as call button on the door unit, which when pressed causes an audible signal to be generated by the control unit. Operating personnel then establish voice communication with the caller, usually to establish his identity and/or the nature of his business. If entry is approved, the operating personnel then cause the door locking mechanism to be released, enabling the caller to gain entry.

Such systems suffer from a disadvantage that, when no personnel are available to open the door, the caller is left without any useful information. He does not know whether to continue to press the call button, whether he should attempt to gain entry via an alternative door or whether to return at another time.

It is an object of the invention to overcome these disadvantages and also to provide a system of advantage in other applications.

### SUMMARY OF THE INVENTION

According to the invention, there is provided a door entry security system comprising a door unit incorporating a call device, a control unit, separate from the door unit, and means for establishing communication between the door unit and the control unit, characterised in that the control unit comprises a message memory unit to relay a pre-recorded out-going message to the caller upon operation of the call device of the door unit and to record in-coming messages provided by the caller at the door unit, wherein the message memory unit is part of a combined telephone and answering machine, capable of making and receiving telephone calls, and relaying and recording telephone messages, via a telecommunications link.

We are aware of British patent application GB 2256112 (Solomons et al.) describes an answering system which is initiated when a caller rings the door bell. The caller may leave a message in response to instructions which are transmitted to him from a telephone answering machine. The message is transmitted back to the answering machine and recorded.

United States patent US 5303300 (Eckstein) describes a security door phone device to enable a user to speak with a person at their front door regardless of whether the user is in their home at the time. The device includes a dialling button which, when pushed, automatically dials one of a selection of predetermined telephone numbers corresponding with the time period when the button is pushed. In one embodiment the visitor is able to leave a message on an answering machine when no one is home.

United States patent US 5657380 (Mozer / Sensory Circuits Inc.) describes an interactive door answering and messaging device with speech synthesis. The system has an interior unit and an exterior unit that communicate via an RF link. The system uses voice recognition and synthesis to interact with visitors. In addition to playing messages to and recording messages from visitors, the system also broadcasts to the inside their responses to predetermined queries, thereby permitting residents to screen visitors in secret. In one embodiment the system uses a telephone interface for establishing communication between the system and a telephone.

The message memory unit in the system according to the invention will usually be located within the building, or at a remote location. The pre-recorded out-going message relayed to the caller will generally be audible, although it is possible to arrange for a visual out-going message to be relayed, for example by incorporating a display unit in the door unit or adjacent thereto.

In a preferred embodiment, the message memory unit is switchable into and out of a "stand-by" mode. When it is in the "stand-by" mode, the pre-recorded out-going message is caused to be relayed to the caller when the call device of the door unit is operated. In this case out-going messages such as: "WE CANNOT COME TO THE DOOR AT PRESENT. PLEASE LEAVE YOUR NAME AND ANY MESSAGE AFTER THE TONE" in the case of domestic premises, or "THE BUILDING IS CLOSED. PLEASE LEAVE YOUR NAME AND TELEPHONE NUMBER AND RETURN AFTER 9:00 TOMORROW" or "FOR ENTRY PLEASE CONTACT OUR CENTRAL SECURITY DEPARTMENT ON TELEPHONE No. xxxxxx" in the case of commercial premises. In the "off" mode, no out-going message is relayed. Usually the memory message unit will be placed in its "off" mode when personnel are available to respond to operation of the call device. The message memory unit may be automatically switched into the "stand-by" mode after repeated operation of the call device, without the door having being opened.

Alternatively however, the memory message unit can be in a "stand-by" mode permanently, so that an out-going message is relayed even when personnel are available. In this case, out-going messages such as "PLEASE COME TO RECEPTION ON THE SECOND FLOOR" may be relayed. A message memory unit which is in "stand-by" mode permanently may also be useful in domestic situations for people having speech difficulties, or where there is a desire to vet callers.

Usually, a door locking mechanism will be provided together with means for triggering release of the door locking mechanism, usually located in the control unit. Ideally, the door locking mechanism is in a locked position when the message memory unit is switched into its "stand-by" mode. Thus, when no personnel are available, opening of the door will be impossible. Only when the message memory unit is turned off and personnel are available can the opening of the door be triggered.

Means may be provided enabling the message memory unit to be remotely switched into and out of its "stand-by" mode. This is especially useful if the message memory unit is mounted in a secure location, or to enable the message memory unit to be switched into the "stand-by" position from outside the building. The means enabling the message memory unit to be remotely switched into and out of its "stand-by" mode may include the telecommunications link, a radio link or a dedicated or shared cable link.

In a preferred embodiment, the message memory unit is capable of storing a plurality of discrete pre-recorded out-going messages. Thus, the pre-recorded out-going message relayed to the caller may be selected according to the time and date or according to the manner of operation of the door unit. In the latter case, the door unit may include a caller identification device such as a key pad or card reading device. Thus certain callers with an approved security clearance may have a specific out-going message relayed to them, such as "TO GAIN ENTRY ENTER xxxx ON THE KEY PAD" or "TO GAIN ENTRY TELEPHONE No. xxxxx", whereas non-approved callers will have a different out-going message relayed to them, such as simply "THE BUILDING IS CLOSED".

The message memory unit may be linked to the door unit by a number of methods, such as via a dedicated or shared cable or a radio link. A fixed link is preferred.

The message memory unit can store the pre-recorded out-going message or messages and the in-coming messages on tape or in a solid state device, such as a programmable chip.

The in-coming messages provided by the caller at the door unit and recorded on the memory message unit may be subsequently interrogated directly, or remotely, for example via the telecommunications link.

The invention will now be further described, purely by way of example, with reference to the accompanying drawings, in which:

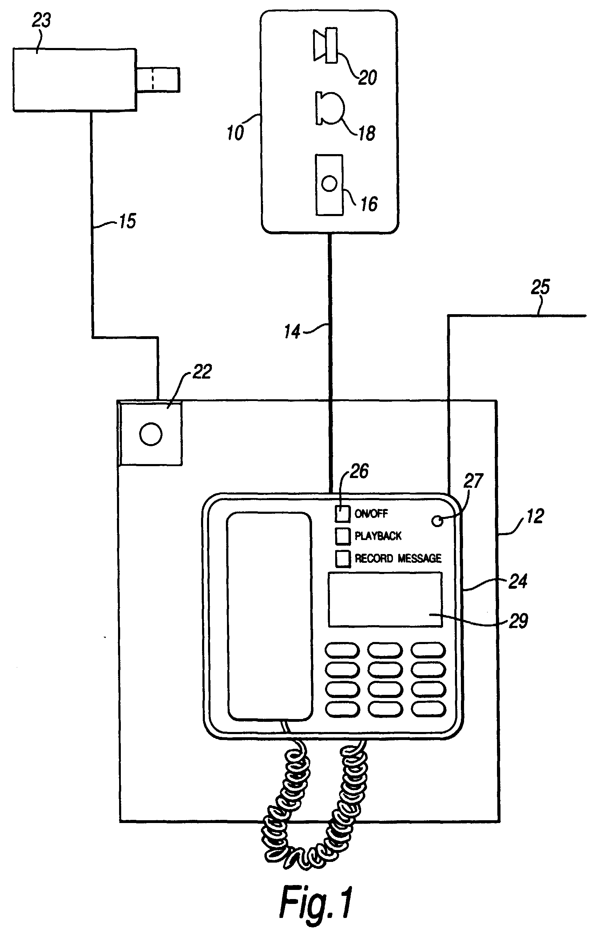

Figure 1 is a schematic illustration of a door entry security system according to the invention.

The door entry security system shown in Figure 1 comprises a door unit 10 and a separate control unit 12 linked to the door unit 10 via a dedicated cable 14. The door unit 10 includes a call button 16, a microphone 18 and a speaker unit 20 In known manner, these features enable voice communication to be established between the door unit 10 and the control unit 12. The door unit 10 is located on, or adjacent, a door (not shown) for which secure entry is required. Typically, this would be the outside door of a building, especially of commercial premises. The control unit 12 includes a door release button 22, connected to the door locking mechanism 23 by a dedicated cable 15. Operation of the release button 22 triggers release of the door locking mechanism 23 in a known manner, for example by enabling electrical power to be fed to a solenoid controlling the locking mechanism 23.

For some applications of the device, the door release button 22 and its connection with the door release mechanism 23 may be dispensed with. In these cases, when entry is to be approved, the door locking mechanism 23 may be released by hand.

A standard combined telephone and digital telephone answering machine 24, capable of making and receiving telephone calls, and relaying and recording telephone messages, via a telecommunications link 25, is incorporated in the control unit 12. The digital telephone answering machine 24 has stored therein one or more pre-recorded out-going messages on tape or in a solid state device. The digital telephone answering machine 24 is switchable into and out of a "stand-by" mode by manual operation of an "on/off" switch 26. The control unit 12 will usually ensure that the door locking mechanism 23 is in a locked position when the digital telephone answering machine 24 is switched into its "stand-by" mode. The telephone answering machine 24 is in communication with the door unit 10 to relay an audible pre-recorded out-going message to the speaker unit 20 upon operation of the call button 16 and to record incoming messages provided by the caller at the door unit 10 via the microphone 18. The telephone answering machine 24 incorporates a red LED light 27 to indicate when one or more in-coming messages have been recorded. The telephone answering machine 24 also includes a microphone and speaker unit 29 enabling personnel within the building to hear incoming messages being recorded as they are received, to hear recorded in-coming messages subsequently played back, to supplement or replace out-going messages relayed to the caller at the door unit 10 by live speech and also to pre-record the out-going messages to be relayed to the caller.

The digital telephone answering machine 24 is capable of storing a number of discrete pre-recorded out-going messages. The specific pre-recorded out-going message relayed to the caller may be selected according to the time and date.

The standard combined telephone and answering machine 24 also provides the usual telecommunications functions, the machine thereby serving a dual purpose.

Power to the system is provided by batteries (not shown) housed in the control unit 12. In an alternative embodiment, power to the system is provided by a mains powered transformer unit.

In an alternative embodiment, the telecommunications link 25 enables the answering machine to be remotely switched into and out of its "stand-by" mode.

In a further embodiment, the door unit may include a caller identification device such as a tone pad. Where the telephone answering machine has a number of discrete pre-recorded out-going messages, the specific pre-recorded out-going message relayed to the caller is selected according to the manner of operation of the tone pad on the door unit.

### Reference Number List

door unit 10
control unit 12
cable 14
cable 15
call button 16
microphone 18
speaker unit 20
door release button 22
locking mechanism 23
telephone answering machine 24
telecommunications link 25
"on/off" switch 26
LED light 27
microphone and speaker unit 29

## Claims

1. A door entry security system comprising a door unit (10) incorporating a call device (16), a control unit (12), separate from said door unit, and means for establishing communication between said door unit (10) and said control unit (12), characterised in that said control unit (12) comprises a message memory unit (24) to relay a pre-recorded out-going message to the caller upon operation of said call device (16) of said door unit (10) and to record in-coming messages provided by the caller at said door unit, wherein said message memory unit (24) is part of a combined telephone and answering machine, capable of making and receiving telephone calls, and relaying and recording telephone messages, via a telecommunications link (25).

2. A door entry security system according to claim 1, wherein said pre-recorded out-going message relayed to the caller is audible.

3. A door entry security system according to claim 1 or 2, wherein said message memory unit (24) is switchable into and out of a "stand-by" mode.

4. A door entry security system according to claim 3, further comprising a door locking mechanism (23) and means (22) for triggering release of said door locking mechanism, wherein said door locking mechanism (23) is in a locked position when said message memory unit (24) is switched into its "stand-by" mode.

5. A door entry security system according to claim 4, wherein said means (22) for triggering release of said door locking mechanism is located in said control unit (12).

6. A door entry security system according to claim 4 or 5, further comprising means enabling said message memory unit (24) to be remotely switched into and out of its "stand-by" mode.

7. A door entry security system according to claim 6, wherein said means enabling said message memory unit (24) to be remotely switched into and out of its "stand-by" mode includes said telecommunications link (25).

8. A door entry security system according to any preceding claim, wherein said message memory unit (24) is capable of storing a plurality of discrete pre-recorded out-going messages.

9. A door entry security system according to claim 8, wherein said pre-recorded out-going message relayed to the caller is selected according to the time and date.

10. A door entry security system according to claim 8, wherein said pre-recorded out-going message relayed to said caller is selected according to the manner of operation of said door unit (10).

11. A door entry security system according to claim 10, wherein said door unit (10) includes a caller identification device.
